# EUROPÄISCHE PATENTSCHRIFT

(11) **EP 1 413 591 B1**
(45) Veröffentlichungstag und Bekanntmachung des Hinweises auf die Patenterteilung: **10.05.2006**
(21) Anmeldenummer: 03023229.2
(22) Anmeldetag: 14.10.2003
(51) Int. Cl.: C08G 18/08, C08G 18/44, C08G 18/69, C09D 175/04

(54) **Wässrige Beschichtungsmittel**
Aqueous coating
Revêtement aqueux

(30) Priorität: 22.10.2002 DE 10249304
(43) Veröffentlichungstag der Anmeldung: 28.04.2004
(73) Patentinhaber: Cytec Surface Specialties Germany GmbH & Co. KG, 65203 Wiesbaden (DE)
(72) Erfinder: Schafheutle, Markus, Dr., 8044 Graz (AT); Arzt, Anton, 8430 Neutillmitsch (AT); Burkl, Julius, 8053 Graz (AT); Petritsch, Gerlinde, 8054 Graz (AT); Glettler, Martina, 8041 Graz (AT); Wango, Jörg, 8142 Wundschuh (AT)
(74) Vertreter: Deckers, Hellmuth Alexander

(56) Entgegenhaltungen:
- EP-A- 0 807 647
- EP-A- 1 020 482
- EP-A- 1 172 389

## Beschreibung

Die Erfindung betrifft wäßrige Beschichtungsmittel.

Wäßrige Beschichtungsmittel auf Basis von Polyurethanen lassen sich durch geeignete Wahl der Bausteine so herstellen und formulieren, daß die damit beschichteten harten Substrate sich weich anfühlen ("soft-feel").

Derartige Beschichtungsmittel werden in der österreichischen Patentanmeldung A 1738/99, entsprechend EP-A 1 092 738, beschrieben. Die verwendeten Polyurethane basieren zum Teil auf Polyester-Polyolen, die durch Einwirkung von Licht oder durch Hydrolyse bei Einwirkung von Wasser, Säuren oder Laugen über längere Zeit und auch bei erhöhten Temperaturen abgebaut werden können. Dadurch werden die mechanischen Eigenschaften der Beschichtung und der Schutz der Oberfläche des Substrats beeinträchtigt. Polyurethane auf Basis von hydroxyfunktionellen Polyen-Polymeren weisen nur geringe Haftung zu den damit beschichteten Substraten auf.

Es besteht daher die Aufgabe, solche Beschichtungsmittel auf Basis von Polyurethanen zu entwickeln, die zu Beschichtungen führen, die gegen die Einwirkung von Licht und gegen Hydrolyse unempfindlich sind, eine gute Haftung auf den Substraten ergeben und die sich weich anfühlen, wobei die Haptik zwischen gummiartig und wachsartig einstellbar sein soll.

Die Aufgabe wird gelöst durch ein Beschichtungsmittel enthaltend Polycarbonatpolyole und ein Polyurethan, das Blöcke enthält abgeleitet von Polyenpolyolen und von Polycarbonatpolyolen.

Gegenstand der vorliegenden Erfindung ist daher ein wäßriges Beschichtungsmittel enthaltend Polycarbonatpolyole **A2** sowie ein mit gegenüber Isocyanaten mindestens difunktionellen Verbindungen **D** kettenverlängertes Polyurethan, mit Bausteinen von Hydroxysäuren **C**, insbesondere aliphatischen Bishydroxyalkylcarbonsäuren, und Urethangruppen abgeleitet von Ein weiterer Gegenstand der vorliegenden Erfindung ist ein Verfahren zur Herstellung solcher wäßrigen Beschichtungsmittel durch stufenweise Umsetzung, wobei zunächst aus Polyenpolyol **A1,** Hydroxysäure **C** und mehrfunktionellem Isocyanat **B** ein Präpolymer hergestellt wird, das mit Polycarbonatpolyol **A2** vermischt und in Wasser dispergiert wird, das einen Kettenverlängerer **D** gelöst enthält.

Ein weiterer Gegenstand der vorliegenden Erfindung ist die Verwendung der erfindungsgemäßen Beschichtungsmittel zur Herstellung von Beschichtungen auf harten Substraten, insbesondere Metallen, Kunststoffen, Holz und mineralischen Substraten, wobei die Haptik des beschichteten Substrats gemäß dem gewünschten Effekt durch Variation der Mengen von Polyenpolyol und Polycarbonatdiol einfach eingestellt werden kann.

Die Polyenpolyole **A1** sind insbesondere Telechele, d. h. sie tragen Hydroxylgruppen an den Kettenenden. Bevorzugt sind Polydiene mit zwei reaktiven Hydroxylgruppen. Sie werden hergestellt insbesondere durch radikalisch initiierte Polymerisation von aliphatischen linearen, verzweigten oder cyclischen Verbindungen mit mindestens zwei konjugierten Doppelbindungen und 4 bis 20 Kohlenstoffatomen. Als Initiator werden solche Radikalbildner eingesetzt, die Hydroxylgruppen am Kettenende erzeugen, wie Wasserstoffperoxid, oder Azoverbindungen wie 2,2'-Azobis-(2-methyl-N-(2-hydroxyäthyl)propionamid). Eine andere Weise zur Erzeugung der Polyenpolyole ist die anionische Polymerisation, beispielsweise gestartet mit Dilithiumnaphthalin. Bei Abbruch der Polymerisation läßt sich die Endgruppe durch geeignete Wahl der Abbruchmittel bestimmen. Geeignete ungesättigte Kohlenwasserstoffe sind besonders Diene, wie Butadien, Isopren, Chloropren, 1,3-Pentadien und Cyclopentadien, diese lassen sich auch in Mischung copolymerisieren. Besonders bevorzugt werden Polybutadiene mit 2 Hydroxylgruppen als Endgruppen, insbesondere solche mit einer zahlenmittleren molaren Masse Mₙ von ca. 1000 bis 15 000 g/mol.

Die Polycarbonatpolyole, insbesondere -diole **A2** leiten sich ab von aliphatischen linearen, verzweigten oder cyclischen Diolen mit 2 bis 40 Kohlenstoffatomen, die über Carbonatgruppen (Kohlensäureestergruppen) verknüpft sind. Sie haben im allgemeinen zahlenmittlere molare Massen von 700 bis 2500 g/mol, und Hydroxylzahlen von 40 bis 160 mg/g. Die Diole sind bevorzugt Glykol, 1,2- und 1,3-Dihydroxypropan, 1,4-Dihydroxybutan, 1,6-Dihydroxyhexan, Neopentylglykol, Di- und Triäthylenglykol und Cyclohexandimethanol, dabei können auch Mischungen dieser Diole eingesetzt werden. Dabei können auch geringe Mengen von mehrfunktionellen Alkoholen wie Trimethyolpropan mitverwendet werden. Ihr Massenanteil an der gesamten Masse der Polyole beträgt bevorzugt bis zu 5 %.

Das Massenverhältnis der Blöcke abgeleitet von Polyenpolyolen **A1** und Blöcken abgeleitet von Polycarbonatpolyolen **A2** in dem Beschichtungsmittel beträgt bevorzugt 1:8 bis 4:5, besonders bevorzugt 1:7 bis 3:5, und insbesondere 1:6 bis 2:5.

Die mehrfunktionellen Isocyanate **B** sind aliphatische oder aromatische Verbindungen mit (im Mittel, soweit Mischungen von zwei oder mehreren Verbindungen eingesetzt werden) zwei oder mehr als zwei Isocyanatgruppen pro Molekül. Unter den geeigneten aromatischen Diisocyanaten werden Toluylendiisocyanat (technische Isomerenmischung der 2,4- und der 2,6-Isomere) und Diphenylmethandiisocyanat genannt. Bevorzugt werden lineare, verzweigte und cyclische aliphatische Isocyanate, insbesondere difunktionelle Isocyanate, mit 2 bis 15 Kohlenstoffatomen in dem (cyclo)aliphatischen Rest. Aus den aromatischen Isocyanaten können auch bevorzugt solche eingesetzt werden, die Isocyanatgruppen an einem Kohlenstoffatom mit aliphatischem Charakter tragen; ein Beispiel dafür ist Tetramethylxylylendiisocyanat. Andere bevorzugte Isocyanate sind 1,6-Diisocyanatohexan, 1,6-Diisocyanato-3,3,5- und -3,5,5-trimethylhexan, 1,4-Diisocyanatocyclohexan, Isophorondiisocyanat, 2,2-Bis-(4-isocyanatocyclohexyl)propan, sowie die von diesen abgeleiteten Uretdione, Allophanate und Biurete.

Die Hydroxysäuren **C** sind bevorzugt Dihydroxycarbonsäuren mit 4 bis 8 Kohlenstoffatomen wie Bishydroxymethylpropionsäure und Bishydroxymethylessigsäure oder Weinsäure. Besonders bevorzugt ist 2,2-Bis-hydroxymethyl-propionsäure. Ebenso geeignet sind beispielsweise Dihydroxysulfonsäuren wie N,N-Bis-(2-hydroxyäthyl)-2-aminoäthansulfonsäure und N,N-Bis-(2-hydroxyäthyl)3-amino-2-hydroxypropansulfonsäure. Anstelle der Hydroxysäuren oder in Mischung mit ihnen lassen sich auch Amine mit mindestens zwei primären oder sekundären Aminogruppen oder Mercaptane mit mindestens zwei Mercaptogruppen und jeweils mindestens einer Säuregruppe einsetzen, Beispiele sind Diaminocarbonsäuren wie Ornithin oder Dimercaptosulfonsäuren wie 2,3-Dimercaptopropansulfonsäure, Beispiel für Moleküle mit gemischten mit Isocyanat reaktive Gruppen sind Serin (-OH und -NH₂) und Cystein (-SH und -NH₂).

Die Hydroxysäuren **C** und/oder die genannten äquivalenten Verbindungen werden bevorzugt in solchen Mengen eingesetzt, daß die Säurezahl des Polyurethans mindestens 15 mg/g, besonders bevorzugt mindestens 20 mg/g, und insbesondere mindestens 25 mg/g beträgt. Dabei ist die Säurezahl wie üblich auf die Masse des Festkörpers in der Dispersion, also auf die des Polyurethans bezogen. Die Säurezahl ist gemäß DIN 53 402 definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g".

Die Kettenverlängerer **D** sind Verbindungen mit mindestens zwei gegenüber Isocyanat reaktiven Wasserstoffatomen, die in wäßriger Lösung oder Dispersion schneller mit dem Isocyanat reagieren als Wasser. Darunter fallen insbesondere Amine mit mindestens zwei primären oder sekundären oder mindestens einer primären und mindestens einer sekundären Aminogruppe, sowie Dimercaptane und Aminomercaptane mit einer primären oder sekundären Aminogruppe. Bevorzugt werden lineare und verzweigte aliphatische Diamine mit 2 bis 9 Kohlenstoffatomen wie Äthylendiamin, 1-4-Diaminobutan, 1,6-Diaminohexan, 2,2,4- und 2,4,4-Trimethyl-1-6-diaminohexan und Neopentandiamin. Ebenso sind Hydrazin oder Dihydrazide von aliphatischen linearen, verzweigten oder cyclischen Dicarbonsäuren geeignet.

Das Verhältnis der Stoffmenge der isocyanatreaktiven Gruppen der Kettenverlängerer **D** zur Stoffmenge der Isocyanatgruppen in den Präpolymeren beträgt bevorzugt 0,5 : 1 bis 1,05 : 1, besonders bevorzugt 0,8 : 1 bis 1 : 1.

Ein Verfahren zur Herstellung der erfindungsgemäßen wäßrigen Polyurethandispersionen umfaßt die Schritte a) Reaktion einer Mischung von Polyenpolyol **A1,** Hydroxysäure **C** sowie ein Neutralisationsmittel für diese in einem organischen Lösungsmittel, das keine Gruppen enthält, die gegenüber Isocyanaten reaktiv sind, mit einem mehrfunktionellen Isocyanat **B**, unter Bildung eines isocyanatfunktionellen Präpolymeren, b) Zusatz des Polycarbonatdiols **A2** und gute Durchmischung, c) Dispergieren der zumindest teilweise reagierten Mischung in Wasser, das einen Kettenverlängerer **D** gelöst enthält, und d) Abdestillieren des organischen Lösungsmittels. Dabei findet in geringem Maß eine Reaktion des zugesetzten Polycarbonatpolyols **A2** mit dem isocyanatfunktionellen Präpolymer statt. Bevorzugt wird zwischen 1 und 20 %, besonders bevorzugt zwischen 2 und 15 %, und insbesondere 3 bis 10 % des Polycarbonatpolyols **A2** durch Reaktion mit dem isocyanatfunktionellen Präpolymer mit diesem chemisch verbunden.

Dabei ist bevorzugt, daß das im ersten Schritt hergestellte isocyanatfunktionelle Präpolymer einen Staudinger-Index von mindestens 18 cm³/g, gemessen in Chloroform bei 20 °C aufweist; besonders bevorzugt ist ein Wert von mindestens 20 cm³/g, und insbesondere in Wert von mindestens 21 cm³/g.

Die erfindungsgemäßen wäßrigen Beschichtungsmittel lassen sich verwenden zur Herstellung von Beschichtungen auf harten Substraten wie Metallen, Kunststoffen, Holz, Beton, Glas, und ergeben Beschichtungen, deren Haptik (Berührungsempfindung) je nach dem Mischverhältnis von Polyenpolyol als Weich- und Polycarbonatdiol als Hartkomponente von wachsartig bis gummiartig eingestellt werden kann. Durch Zusatz von Vernetzungsmitteln wie Aminoplastharzen und bevorzugt mehrfunktionellen Isocyanaten, die gegebenenfalls hydrophil modifiziert sein können, lassen sich die Beschichtungen bei erhöhter Temperatur oder bei Raumtemperatur härten. Dabei können den wäßrigen Dispersionen die üblichen Zusätze wie Pigmente, Antischaummittel, Antiabsetzmittel und Verdicker zugesetzt werden. Überraschenderweise zeigt sich, daß die erfindungsgemäßen Polyurethandispersionen insbesondere bei Vernetzung mit mehrfunktionellen Isocyanaten eine ausgezeichnete Haftung auf allen genannten Substraten aufweisen.

Die nachfolgenden Beispiele erläutern die Erfindung, ohne sie jedoch zu beschränken. Die früher so bezeichnete "Grenzviskositätszahl", nach DIN 1342, Teil 2.4, "Staudinger-Index" *J*_{g} genannt, ist der Grenzwert der Staudinger-Funktion *J*ᵥ bei abnehmender Konzentration und Schubspannung, wobei *J*ᵥ die auf die Massenkonzentration **β**_{B} *= m* _{B} / ***V*** des gelösten Stoffes B (mit der Masse ***m*** _{B} des Stoffes im Volumen ***V*** der Lösung) bezogene relative Viskositätsänderung ist, also ***J***ᵥ = (η, 1) / β_{B}. Dabei bedeutet ηᵣ - 1 die relative Viskositätsänderung, gemäß ηᵣ - 1 = (η- η ₛ) / η ₛ. Die relative Viskosität ηᵣ ist der Quotient aus der Viskosität η der untersuchten Lösung und der Viskosität ηₛ des reinen Lösungsmittels. (Die physikalische Bedeutung des Staudinger-Index ist die eines spezifischen hydrodynamischen Volumens des solvatisierten Polymerknäuels bei unendlicher Verdünnung und im Ruhezustand.) Die üblicherweise für ***J*** verwendete Einheit ist "cm³/g"; früher häufig "dl/g". Die Hydroxylzahl ist gemäß DIN 53 240 definiert als der Quotient derjenigen Masse ***m***_{KOH} an Kaliumhydroxid, die genausoviel Hydroxylgruppen aufweist wie eine zu untersuchende Probe, und der Masse ***m***_{B} dieser Probe (Masse des Feststoffes in der Probe bei Lösungen oder Dispersionen); ihre übliche Einheit ist "mg/g".

### Beispiele

### Beispiel 1

302,3 g Polybutadiendiol (Hydroxylzahl ca. 45 bis 50 mg/g, ®PolyBD-R45 HTLO der Fa. Cray Valley), 10,8 g Triäthylamin und 17,9 g Dimethylolpropionsäure wurden in 340 g Methyläthylketon bei 75 bis 80 °C gelöst. Nach Erhalt einer klaren, homogenen Lösung wurden 89,9 g Isophorondiisocyanat zugegeben. Der Reaktor wurde verschlossen und der Ansatz so lange gerührt, bis der Staudinger-Index ("Grenzviskositätszahl") einen Wert zwischen 22 und 23 cm³/g erreicht hatte. Dabei stieg der Innendruck des Reaktors auf ca. 0,4 bar über den Außendruck an. Nach Erreichen dieses Staudinger-Index wurden 107,7 g Polycarbonatdiol (®Ravecarb 107, Enichem) zugegeben und 15 Minuten mit dem Präpolymer verrührt. Diese Mischung wurde anschließend mit einer Lösung aus 19,6 g Adipinsäuredihydrazid in 665,3 g entionisiertem Wasser dispergiert und dabei kettenverlängert. Dabei fiel die Temperatur auf ca. 40 °C ab. Nach Verrühren von 15 min wurde die Temperatur langsam auf 75 °C gesteigert. Dabei wurde ab etwa 45 °C ein Azeotrop aus Methyläthylketon und Wasser abdestilliert. Nachdem das meiste Methylethylketon abdestilliert war, wurde weiter unter Steigerung der Temperatur bei leichtem Unterdruck (100 bis 400 mbar) weiterdestilliert. Nachdem das Methyläthylketon vollständig entfernt war, wurde durch Zugabe von entionisiertem Wasser auf einen Festkörper-Massenanteil (nichtflüchtigen Anteil) von 50 % eingestellt. Man erhielt eine feinteilige, lösungsmittelfreie Dispersion mit einer Viskosität (23 °C, 25 s⁻¹) von 930 mPa·s.

### Beispiel 2

302,3 g Polybutadiendiol (Hydroxylzahl 45 bis 50 mg/g, ®PolyBD-R45 HTLO der Fa. Cray Valley), 9,2 g Triäthylamin und 17,9 g Dimethylolpropionsäure wurden in 340 g Methyläthylketon bei 75 bis 80 °C gelöst. Nach Erhalt einer klaren, homogenen Lösung wurden 89,9 g Isophorondiisocyanat zugegeben. Der Reaktor wurde verschlossen und der Ansatz so lange gerührt, bis d er Staudinger-Index ("Grenzviskositätszahl") einen Wert zwischen 22 und 23 cm³/g erreicht hatte. Dabei stieg der Innendruck des Reaktors um ca. 0,4 bar gegenüber dem Außendruck an. Nach Erreichen dieses Staudinger-Index wurden 107,7 g Polycarbonatdiol (®Ravecarb 107 der Fa. Enichem) zugegeben und 15 Minuten verrührt. Diese Mischung wurde mit 607 g entionisiertem Wasser dispergiert und sofort danach mit einer Lösung aus 6,8 g Äthylendiamin in 60 g entionisiertem Wasser kettenverlängert. Dabei fiel die Temperatur auf ca. 40 °C ab. Nach Verrühren von 15 min wurde die Temperatur langsam auf 75 °C gesteigert. Dabei wurde ab etwas 45 °C ein Azeotrop aus Methyläthylketon und Wasser abdestilliert. Nachdem das meiste Methyläthylketon abdestilliert war, wurde weiter unter Steigerung der Temperatur bei leicht vermindertem Druck (100 bis 400 mbar) weiterdestilliert. Nach der vollständigen Entfernung des Methyläthylketon wurde mit entionisiertem Wasser auf einen Festkörper-Massenanteil (nichtflüchtigen Anteil) von 45 % eingestellt. Man erhielt eine feinteilige, lösungsmittelfreie Dispersion mit einer Viskosität (23 °C, 25 s⁻¹) von 252 mPa·s.

### Beispiel 3

302,3 g Polybutadiendiol (Hydroxylzahl 45 bis 50 mg/g, ®PolyBD -R45 HTLO der Fa. Cray Valley), 9,2 g Triäthylamin und 17,9 g Dimethylolpropionsäure wurden in 340 g Methyläthylketon bei 75 bis 80 °C gelöst. Nach Erhalt einer klaren, homogenen Lösung wurden 89,9 g Isophorondüsocyanat zugegeben. Der Reaktor wurde verschlossen und der Ansatz so lange gerührt, bis der Staudinger-Index ("Grenzviskositätszahl") einen Wert zwischen 22 und 23 cm³/g erreicht hatte. Dabei stieg der Innendruck des Reaktors gegenüber dem Außendruck um ca. 0,4 bar an. Nach Erreichen dieses Staudinger-Index wurden 35,5 g Polycarbonatdiol (®Ravecarb 107 der Fa. Enichem) zugegeben und 15 Minuten verrührt. Diese Mischung wurde mit 579 g entionisiertem Wasser dispergiert und sofort danach mit einer Lösung aus 6,8 g Äthylendiamin in 60 g entionisiertem Wasser kettenverlängert. Dabei fiel die Temperatur auf ca. 40 °C ab. Nach Verrühren von 15 min wurde die Temperatur langsam auf 75 °C gesteigert. Dabei wurde ab etwa 45 °C ein Azeotrop aus Methyläthylketon und Wasser abdestilliert. Nachdem das meiste Methyläthylketon abdestilliert war, wurde weiter unter Steigerung der Temperatur bei leicht vermindertem Druck (100 bis 400 mbar) weiterdestilliert. Nachdem das Methyläthylketon vollständig entfernt war, wurde durch Zugabe von entionisiertem Wasser auf einen Festkörper-Massenanteil (nichtflüchtigen Anteil) von 45 % eingestellt. Man erhielt eine feinteilige, lösungsmittelfreie Dispersion mit einer Viskosität (23 °C, 25 s⁻¹) von 720 mPa·s.

### Beispiel 4 Soft-Feel-Lacke

Gemäß den Angaben in der Tabelle wurden Lacke hergestellt durch Mischen der als Teil 1 bezeichnete Zusammensetzung in einem Dissolver, und 30-minütiges Vermahlen auf einer Perlmühle. Die erhaltene Mischung wurde vom Schaum befreit und mit dem als Teil 2 bezeichneten Vernetzer unmittelbar vor der Applikation vermischt.

Durch Wahl des Verhältnisses zwischen Polycarbonat-Diol und Polybutadien-Diol ist die Haptik der erzeugten Beschichtung gezielt einstellbar.

**Tabelle: Lackzusammensetzung**

| | Lack | 4.1 | 4.2 | 4.3 |
|---|---|---|---|---|
| Teil 1 | Beschichtungsmittel aus Beispiel | 1 | 2 | 3 |
| | Masse der PU-Dispersion | 56,72 | 57,24 | 49,3 |
| | Mattierungsmittel¹ | 6,11 | 4,88 | 5,05 |
| | Mattierungsmittel² | 0,12 | 1,12 | 0,04 |
| | Rußpaste ³ | 3,20 | 3,20 | 3,20 |
| | Entschäumer⁴ | 0,83 | 0,83 | 0,74 |
| | Benetzungsmittel⁵ | 0,83 | 0,83 | 0,74 |
| | Rheologicadditiv⁶ | 0,40 | 0,40 | 0,40 |
| | Methoxypropanol | 1,21 | 0,29 | 1,25 |
| | N-Methylpyrrolidon | 0,25 | 0,08 | 0,11 |
| | entionisiertes Wasser | 23,01 | 22,86 | 31,97 |
| Teil 2 | ®Desmodur N 3100⁷ | 5,53 | 0,54 | 3,05 |
| | ®Desmodur N 3300⁸ | 1,79 | | |
| | ®Desmodur 2306⁹ | | 7,73 | 4,15 |
| | Festkörper-Massenanteil in % | 43,5 | 44,5 | 38,4 |
| | Lösungsmittelgehalt in % | 1,46 | 0,37 | 1,36 |
| | Auslaufzeit 4 mm-Becher in s | 48 | 50 | 40 |
| | Flammpunkt DIN EN 22719 in °C | nicht brennbar | | |
| | Trocknen | Ablüften bei Raumtemperatur, forciertes Trocknen 30 min, 80 °C | | |
| | Haptik | gummiartig | zwischen gummiartig und wachsartig | wachsartig |

### Erläuterungen:

- 1: pyrogene Kieselsäure, ®Degussa TS 100
- 2: Polyamidpulver ®Orgasol 2001 UDNAT 2
- 3: ®Colanyl black PR 130, Clariant GmbH
- 4: Entschäumer auf Basis von Mineralöl / Kieselsäure
- 5: Benetzungsadditiv ®Byk 346
- 6: Fließverbessererer ®Additol VXW 6200
- 7: Heaxmethylendüsocyanat trimer, hydrophil, Bayer AG
- 8: Hexamethylendüsoryanat trimer, Bayer AG
- 9: aliphatisches mehrfunktionelles Isoycanat, Bayer AG

## Patentansprüche

1. Wäßrige Beschichtungsmittel enthaltend Polycarbonatpolyole **A2** und ein mit gegenüber Isocyanaten mindestens difunktionellen Verbindungen **D** kettenverlängertes Polyurethan, mit Bausteinen von Hydroxysäuren **C** und Urethangruppen abgeleitet von mehrfunktionellen Isocyanaten **B,** wobei das Polyurethan Blöcke enthält abgeleitet von Polyenpolyolen **A1** und von Polycarbonatpolyolen **A2.**

2. Wäßrige Beschichtungsmittel nach Anspruch 1, **dadurch gekennzeichnet, daß** das Massenverhältnis von Blöcken abgeleitet von Polyenpolyolen **A1** und Blöcken abgeleitet von Polycarbonatpolyolen **A2** in dem Beschichtungsmittel 1:8 bis 4:5 beträgt.

3. Wäßrige Beschichtungsmittel nach Anspruch 1, **dadurch gekennzeichnet, daß** seine Säurezahl mindestens 15 mg/g beträgt.

4. Wäßrige Beschichtungsmittel nach Anspruch 1, **dadurch gekennzeichnet, daß** die Isocyanate **B** aliphatische lineare, verzweigte oder cyclische Isocyanate sind.

5. Wäßrige Beschichtungsmittel nach Anspruch 1, **dadurch gekennzeichnet, daß** das Verhältnis der Stoffmenge der isocyanatreaktiven Gruppen der Kettenverlängerer **D** zur Stoffmenge der Isocyanatgruppen in den isocyanatfunktionellen Präpolymeren 0,5 zu 1 bis 1 zu 1 beträgt.

6. Verfahren zur Herstellung von wäßrigen Beschichtungsmitteln nach Anspruch 1, **dadurch gekennzeichnet, daß** im erstens Schritt a) ein isocyanatfunktionelles Präpolymer aus den Polyenpolyolen **A1**, den Hydroxysäuren **C** und den mehrfunktionellen Isocyanaten **B** hergestellt wird, das im zweiten Schritt b) mit dem Polycarbonatpolyol **A2** vermischt wird und nach einer zumindest teilweisen Reaktion im dritten Schritt c) mit Wasser dispergiert wird, das einen Kettenverlängerer **D** enthält.

7. Verfahren nach Anspruch 6, **dadurch gekennzeichnet, daß** bei der Reaktion im Schritt c) 1 bis 20 % des Polycarbonatpolyols **A2** mit dem isocyanatfunktionellen Präpolymer unter Adduktbildung reagieren.

8. Verfahren nach Anspruch 6, **dadurch gekennzeichnet, daß** das im Schritt a) hergestellte isocyanatfunktionelle Präpolymer einen Staudinger-Index von mindestens 18 cm³/g aufweist.

9. Verwendung von wäßrigen Beschichtungsmitteln nach Anspruch 1 zur Herstellung von weichen Beschichtungen, **dadurch gekennzeichnet, daß** Substrate ausgewählt aus Metall, Kunststoff, Holz, Stein und Beton mit einem Beschichtungsmittel gemäß Anspruch 1 und einem Isocyanatgruppen-haltigen Vernetzungsmittel beschichtet werden.

10. Substrate beschichtet mit wäßrigen Beschichtungsmitteln gemäß Anspruch 1.

## Claims

1. An aqueous coating composition comprising polycarbonate polyols **A2** and a polyurethane chain-extended with compounds **D** which are at least difunctional with respect to isocyanates, said polyurethane comprising building blocks of hydroxy acids **C** and urethane groups derived from polyfunctional isocyanates **B** and said polyurethane containing blocks derived from polyene polyols **A1** and from polycarbonate polyols **A2**.

2. The aqueous coating composition as claimed in claim 1, wherein the mass ratio of blocks derived from polyene polyols **A1** to blocks derived from polycarbonate polyols **A2** is from 1:8 to 4:5.

3. The aqueous coating composition as claimed in claim 1, whose acid number is at least 15 mg/g.

4. The aqueous coating composition as claimed in claim 1, wherein the isocyanates **B** are aliphatic linear, branched or cyclic isocyanates.

5. The aqueous coating composition as claimed in claim 1, wherein the ratio of the amount of substance of the isocyanate-reactive groups of the chain extenders D to the amount of substance of the isocyanate groups in the isocyanate-functional prepolymers is from 0.5:1 to 1:1.

6. A process for preparing an aqueous coating composition as claimed in claim 1, which comprises in the first step a) preparing an isocyanate-functional prepolymer from the polyene polyols **A1**, the hydroxy acids **C**, and the polyfunctional isocyanates **B** and in the second step b) mixing said prepolymer with the polycarbonate polyol **A2** and, after an at least partial reaction, in the third step c) dispersing this mixture with water containing a chain extender **D**.

7. The process as claimed in claim 6, wherein, in the reaction in step c), from 1 to 20% of the polycarbonate polyol **A2** reacts with the isocyanate-functional prepolymer to form an adduct.

8. The process as claimed in claim 6, wherein the isocyanate-functional prepolymer prepared in step a) has a Staudinger index of at least 18 cm³/g.

9. The use of an aqueous coating composition as claimed in claim 1 to produce soft coatings, **characterized in that** substrates selected from metal, plastic, wood, stone, and concrete are coated with a coating composition as claimed in claim 1 and an isocyanato-containing crosslinking agent.

10. A substrate coated with an aqueous coating composition as claimed in claim 1.

## Revendications

1. Composition aqueuse de revêtement contenant des polycarbonatepolyols A2 et un polyuréthanne ayant subi une extension de chaîne par des composés D au moins difonctionnels vis-à-vis des isocyanates, comportant des composants hydroxyacides C et des groupes uréthannes qui dérivent de polyisocyanates B, le polyuréthanne contenant des blocs qui dérivent de polyènepolyols A1 et de polycarbonatepolyols A2.

2. Composition aqueuse de revêtement selon la revendication 1, **caractérisée en ce que** le rapport en masse des blocs qui dérivent de polyènepolyols A1 aux blocs qui dérivent de polycarbonatepolyols A2 dans la composition de revêtement est de 1:8 à 4:5.

3. Composition aqueuse de revêtement selon la revendication 1, **caractérisée en ce que** son indice d'acide est d'au moins 15 mg/g.

4. Composition aqueuse de revêtement selon la revendication 1, **caractérisée en ce que** les isocyanates sont des isocyanates aliphatiques à chaîne droite ou ramifiée, ou cycliques.

5. Composition aqueuse de revêtement selon la revendication 1, **caractérisée en ce que** le rapport entre la quantité de matière des groupes réactifs vis-à-vis des isocyanates de l'agent d'extension de chaîne D à la quantité de matière des groupes isocyanates se trouvant dans les prépolymères à fonctionnalité isocyanate est de 0,5:1 à 1:1.

6. Procédé de préparation de compositions aqueuses de revêtement selon la revendication 1, **caractérisé en ce que**, dans une première étape a), on prépare un prépolymère à fonctionnalité isocyanate à partir des polyènepolyols A1, des hydroxyacides C et des polyisocyanates B, prépolymère qui, dans l'étape b), est mélangé au polycarbonatepolyol A2, et, après une réaction au moins partielle, est dans la troisième étape c) dispersé avec de l'eau contenant un agent d'extension de chaîne D.

7. Procédé selon la revendication 6, **caractérisé en ce que**, dans la réaction de l'étape c), on fait réagir 1 à 20 % du polycarbonatepolyol A2 avec le prépolymère à fonctionnalité isocyanate, avec formation d'un adduit.

8. Procédé selon la revendication 6, **caractérisé en ce que** le prépolymère à fonctionnalité isocyanate préparé dans l'étape a) présente un indice de Staudinger d'au moins 18 cm³/g.

9. Utilisation de compositions aqueuses de revêtement selon la revendication 1 pour préparer des revêtements souples, **caractérisées en ce que** des subjectiles, choisis parmi les métaux, les plastiques, le bois, la pierre et le béton, sont revêtus d'une composition de revêtement selon la revendication 1 et d'un agent de réticulation contenant des groupes isocyanate.

10. Subjectiles revêtus de compositions aqueuses de revêtement selon la revendication 1.
